(19) Europäisches Patentamt
European Patent Office
Office européen des brevets

(11) EP 1 841 315 B1

(12) **EUROPEAN PATENT SPECIFICATION**

(45) Date of publication and mention of the grant of the patent:
**07.10.2009 Bulletin 2009/41**

(21) Application number: **05709183.7**

(22) Date of filing: **19.01.2005**

(51) Int Cl.:
***A01N 25/34*** *(2006.01)*

(86) International application number:
**PCT/IT2005/000026**

(87) International publication number:
**WO 2006/077604 (27.07.2006 Gazette 2006/30)**

# (54) INCLUSION COMPLEX BETWEEN A CYCLODEXTRIN DERIVATIVE AND DEET, FORMULATIONS AND USES THEREOF

EINSCHLUSSKOMPLEX ZWISCHEN EINEM CYCLODEXTRINDERIVAT UND DEET, FORMULIERUNGEN UND IHRE VERWENDUNGEN

COMPLEXE D'INCLUSION ENTRE UN DERIVE DE CYCLODEXTRINE ET LE DEET, FORMULATIONS ET UTILISATIONS ASSOCIEES

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**10.10.2007 Bulletin 2007/41**

(73) Proprietor: **POINTEX S.p.A.**
**59100 Prato (IT)**

(72) Inventors:
- **RANALDO, Angelo Marco**
  **I-50013Campi Bisenzio (IT)**
- **NESTI, Solitario**
  **I-51030 S. Baronto (Pistoia) (IT)**
- **CORSI, Leopoldo**
  **I-56038 Ponsacco (Pisa) (IT)**

(74) Representative: **Bottero, Carlo**
**Bugnion S.p.A.**
**Viale Lancetti 17**
**20158 Milano (IT)**

(56) References cited:
**WO-A-02/22941** **WO-A-03/093325**

- **DATABASE CA [Online] CHEMICAL ABSTRACTS SERVICE, COLUMBUS, OHIO, US; LO NOSTRO, PIERANDREA ET AL: "Modification of a cellulosic fabric with .beta.-cyclodextrin for textile finishing applications" XP002358372 retrieved from STN Database accession no. 2003:495041 & JOURNAL OF INCLUSION PHENOMENA AND MACROCYCLIC CHEMISTRY , VOLUME DATE 2003, 44(1-4), 423-427 CODEN: JIPCF5; ISSN: 1388-3127, 2002,**
- **DATABASE CA [Online] CHEMICAL ABSTRACTS SERVICE, COLUMBUS, OHIO, US; LO NOSTRO, PIERANDREA ET AL: "Surface treatments on Tencel fabric: Grafting with .beta.-cyclodextrin" XP002358373 retrieved from STN Database accession no. 2003:174798 & JOURNAL OF APPLIED POLYMER SCIENCE , 88(3), 706-715 CODEN: JAPNAB; ISSN: 0021-8995, 2003,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical field of the invention

The present invention relates to a stable liquid water-based composition having a repellent activity towards harmful and/or troublesome insects, comprising an inclusion compound between a β-cyclodextrin derivative and a repellent substance towards said insects. The invention also relates to a method of use of said composition for impregnating in a stable manner textile fibers and/or fabrics, so as to give the latter the aforesaid repellent activity, as well as to the fabrics obtained through said method.

### State of the art

Cyclodextrins are cyclic compounds comprising 6 to 8 D-glucopyranose (D-glucose) units (α-, β- and γ-cyclodextrins, respectively).
These compounds preferably take the shape of a frustum of cone having outside primary and secondary hydroxyl functions, which make cyclodextrin molecules soluble in a water environment.
Conversely, the inner portion of the molecule is made up of a hydrophobic cavity, which can include/house apolar or little polar substances, per se non-soluble or little soluble in water.
Inclusion adducts or complexes between cyclodextrins and said apolar substances often have a sufficient initial solubility in water or in water-based solvents.
Said solubility basically depends on the stability of said complexes, which depends in its turn mostly on the possibility for the guest molecule to enter and to stay in the hydrophobic cavity of cyclodextrin.
If the inclusion complex cyclodextrin/apolar substance is not particularly stable (for instance when guest - apolar substance - size do not perfectly suit host - cyclodextrin - cavity), aqueous solutions of said complex tend in a shorter or longer term to get turbid and/or to precipitate the aforesaid apolar substance released by cyclodextrin.
Beyond being used for making apolar substances water-soluble, cyclodextrins are also used in various technical fields, for instance in the medical field, as vehicles for substances they make complexes with.
If modified with suitable reactive functional groups, cyclodextrins (and their inclusion complexes) can also be fixed in a stable manner (for instance by covalent bonds) to suitable substrates and give the latter particular properties and/or features.
For instance, reactive derivatives of cyclodextrins have been used in the textile field for treating fibers and/or fabrics so as to prevent or reduce the formation of bad smells due to transpiration.
In another embodiment, fragrances and scents, or substances with an antimicrobial activity, have been incorporated into said cyclodextrins (once fixed to the fabric), which substances are gradually released, thus giving the fabric long-term freshness and hygiene.
In order to obtain a convenient and cheap treatment of fibers and/or fabrics, it would be particularly advantageous to have a liquid aqueous composition, stable in time and ready for use, containing an inclusion complex of a reactive cyclodextrin derivative with a suitable active substance, to be reacted by contact (for instance by impregnation or other techniques known in the field) with the fiber or fabric, giving the latter the characteristic properties of said active substance.
Concerning this, WO 03/093325 describes the preparation of aqueous solutions of cyclodextrin and/or of one of its inclusion complexes, in which said solutions are stabilized by adding convenient amounts of specific stabilizing additives such as: water-soluble organic solvents, ε-caprolactam, salts and/or various buffers. Said additives are strictly necessary so as to obtain stable solutions.
As a matter of fact, should they be absent, the aforesaid solutions of cyclodextrin inclusion complexes degrade in few days.
It is therefore still necessary to have stable aqueous solutions of an inclusion complex of a reactive cyclodextrin derivative with a suitable active substance, in which said solutions are free from stabilizing additives of any type, so as to be used for impregnating in a stable manner fibers and/or fabrics, avoiding any possible interference of said additives and giving said fabrics the characteristic properties of said active substance.
The present invention aims at providing a satisfactory answer to the technical problem described above, obviating the disadvantages related to the prior art.
This aim and others as will be evident from the following detailed description have been achieved by the Applicant, who has found quite unexpectedly that an inclusion complex between a reactive cyclodextrin derivative and suitable substances having a repellent activity towards harmful and/or troublesome insects can generate an aqueous solution, stable in time and ready for use, to be fixed chemically onto fibers and/or fabrics, making them active for a long time towards said insects.
An object of the present invention is therefore a liquid composition having a repellent action towards harmful and/or troublesome insects, comprising a stable aqueous solution of an inclusion complex between a reactive cyclodextrin

derivative and substances having a repellent activity towards said insects for chemically treating fibers and/or fabrics, as described in the appended independent claims.

Another object of the present invention is the use of said composition for fixing in a stable manner said inclusion complex onto cellulose-based fibers and/or fabrics, so as to give the latter a long-term insect-repellent action, as described in the appended independent claim.

Still another object of the present invention is a method for fixing in a stable manner said inclusion complex onto cellulose-based fibers and/or fabrics, as described in the appended independent claim.

A further object of the present invention is the cellulose-based fiber and/or fabric functionalized in a stable manner with said inclusion complex.

Preferred embodiments of the invention are disclosed in the appended dependent claims.

**Description of the invention**

The cyclodextrins, as used in the present description of the invention, comprises β-cyclodextrins and derivatives thereof.

The reactive cyclodextrin derivative according to the present invention comprises at least one reactive group that is able to react with the functional groups of textile fibers and/or fabrics (for instance hydroxyl groups of cellulose, amino, carboxyl, hydroxyl or thiol groups of wool and silk, amino or carboxyl groups of polyamide fibers), giving rise to stable covalent chemical bonds.

Preferably, said at least one reactive groups is selected among: vinylsulfonyl, α-haloacryloyl groups or a heterocycle containing nitrogen having at least one halogen substituent.

More preferably, said group is a heterocycle containing nitrogen having at least one halogen substituent; more preferably, it is a 1,3,5-triazine substituted with a halogen radical and by a -OR radical, where R = H, an alkali cation, a $C_1$-$C_8$ alkyl radical.

In preferred embodiment, said 1,3,5-triazine is substituted with chlorine and with ONa.

Reactive derivatives according to the present invention have proved β-cyclodextrin derivatives. In a particularly preferred embodiment, the reactive β-cyclodextrin derivative is the sodium salt of β-cyclodextrin (in short CD) substituted with the reactive 2-chloro-4-hydroxy-1,3,5-triazinyl group (in short monochloro triazine or MCT).

The number of said 2-chloro-4-hydroxy-triazine substituents is preferably of 1 to 3 per β-cyclodextrin molecule; preferably of 2 to 3.

In a preferred embodiment, the reactive β-cyclodextrin has the following structural formula:

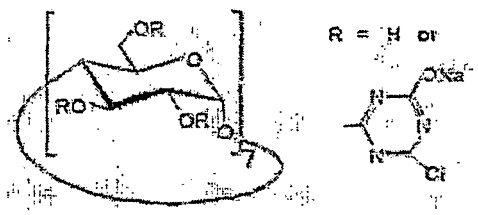

Said product, available on the market under the name Cavasol W7 MCT® (supplier: Wacker Chemie AG, Germany), has an average molecular weight of about 1566 and a degree of substitution DS=0.4 (i.e. 0.4 units of triazine substituent per glucopyranose unit), corresponding to about 2.8 units of triazine substituent per β-cyclodextrin molecule.

The substance having a repellent activity towards harmful and/or troublesome insects, used for preparing the inclusion complexes cyclodextrin/repellent according to the present invention, is DEET (N,N-diethyl-m-toluamide), a synthetic repellent, which can be incorporated in a stable manner into the cavity of cyclodextrin.

DEET (N,N-diethyl-m-toluamide) is preferably used as repellent towards mosquitoes.

Fabrics impregnated with aqueous solutions of inclusion complexes cyclodextrin/repellent according to the present invention have proved particularly useful as repellent towards a large number of harmful or troublesome insects, such as for instance flies, fleas, ticks, mosquitoes, bees, wasps, hornets. Preferably, said fabrics have proved particularly effective towards mosquitoes.

**Detailed description of the invention**

For a better understanding, the present invention is disclosed in the following in further detail with reference to a particularly preferred embodiment, although the skilled technician should not regard the potential applications thereof as limited.

The liquid composition according to the present invention comprises a stable aqueous solution of an inclusion complex between a reactive β-cyclodextrin derivative, as described above, and N,N-diethyl-m-toluamide (DEET). Said liquid composition comprises an aqueous solution in which:

- said β-cyclodextrin derivative is present in an amount of 35 g/l of water to 350 g/l of water; preferably of 50 g/l to 300 g/l; and
- said DEET is present in an amount of 5 g/l of water to 50 g/l of water; preferably of 10 g/l to 40 g/l. The molar ratio β-cyclodextrin derivative/DEET is of 10:1 to 1:1; preferably 5:1 to 1:1.

More preferably, the β-cyclodextrin derivative is added in a molar excess referred to stoichiometric ratio with respect to DEET; for instance in a ratio of 2:1 to 1:1.

In a preferred embodiment, the molar ratio β-cyclodextrin derivative/DEET is of about 1.22:1.

In a particularly preferred embodiment, the stable aqueous solution according to the present invention is made up of 250 g of Cavasol W7 MCT® and 25 g of DEET in 1 1 of water.

Said solution remains clear and does not get turbid (therefore without leaving evident residues of DEET, which is insoluble in water) for at least 30 days, at atmospheric pressure and at a temperature of 10°C to 50°C.

Said solution is prepared by dissolving Cavasol W7 MCT® into the desired amount of water and then adding DEET under stirring until a clear solution is obtained.

In case of a residual milky appearance, said solution is made clear by filtration and then used or preserved before use.

Short before use, said solution is added with a suitable amount of catalyst in order to accelerate the fixing reaction onto the fiber and/or fabric.

Preferably, said catalyst is added in an amount of 5 g/l to 80 g/l with respect to the amount of water used; more preferably of 15 to 70 g/l.

The catalyst is preferably chosen among inorganic salts such as for instance sodium carbonate ($Na_2CO_3$).

In a particularly preferred embodiment, the catalyst is sodium carbonate, added in an amount of about 60 g/l of used water.

Preferably, the composition according to the present invention is impregnated/fixed in a stable manner onto natural and/or artificial fibers having a cellulose matrix, such as for instance cotton, blended cotton, rayon and the like.

As required and depending on the type of fabric, impregnation is carried out using techniques known in the field, such as spraying, padding, coating (with physical-mechanical means), spreading.

Depending on the technique used, very different degrees of impregnation of the fabric undergoing treatment can be achieved.

The degree of impregnation is usually expressed as Pick-up [%], the latter referring to fabric percentage weight increase after impregnation.

To state it mathematically:

$$\text{Pick-up [\%]} = \frac{\text{(weight of impregnated fabric - weight of non-impregnated fabric)}}{\text{(weight of non-impregnated fabric)}} \cdot 100$$

For instance, in case of spraying (a more delicate technique) degrees of impregnation (i.e. Pick-up [%] values) of 5% to 20% are obtained; preferably of 10% to 15%.

In case of techniques having a higher impregnating effect, Pick-up [%] values above 20% can also be achieved; for instance above 30%; preferably above 40% up to values above 80-85%.

For instance, in case of padding (by suitably varying feeding speed and/or roll pressure) Pick-up [%] values of 50% to 85% are obtained; preferably of 60% to 80%. By suitably varying techniques and operating conditions it is therefore possible to achieve Pick-up [%] values of 5% to 85%.

Impregnation is then followed by fixing, when the reaction in which the covalent bond between fiber and complex cyclodextrin/DEET is formed takes place. Preferably, fixing occurs at temperatures above room temperature for a period of time depending on the machine and on the type of catalyst used (as well as on the amount thereof).

For instance, a thermofixing in a "Ramouse" machine is preferably executed at a temperature of 120°C to 180°C for 2 to 10 minutes.

## Description of a preferred embodiment of the invention

The particularly preferred reactive β-cyclodextrin derivative, which is used and described in the following experimental section, is a product known as Cavasol W7 MCT® as previously described (in the following referred to for simplicity's sake as Cavasol).

The active substance included in said Cavasol is DEET (N,N-diethyl-m-toluamide) having the following structural formula:

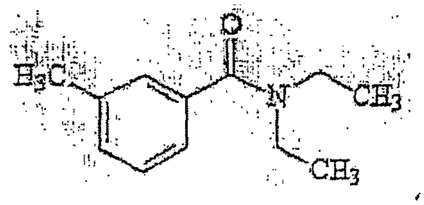

and the following features:

- it is used as repellent against mosquitoes;
- it is soluble in ethyl alcohol ($CH_3CH_2OH$) and acetonitrile ($CH_3CN$);
- it is insoluble in water.

Both Cavasol and its inclusion complex with DEET (for simplicity's sake Cavasol/DEET) are water-soluble and fix to the fiber (in this specific case to cotton cellulose matrix) through the following nucleophilic substitution reaction:

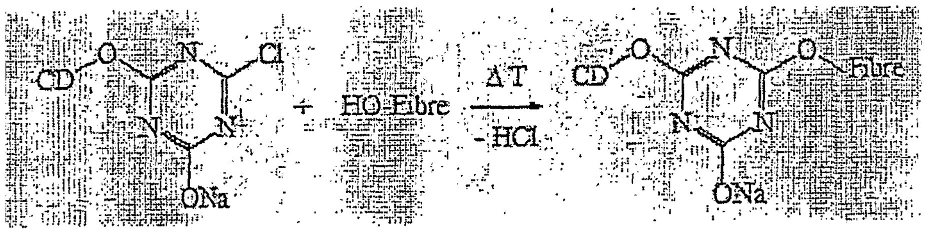


Said process is accelerated by operating in an alkaline environment (pH 10-11) with the addition of sodium carbonate ($Na_2CO_3$).

After impregnation (through padding) the fabric is thermofixed, preferably in a "Ramouse" machine, at 150°C for about 5 min.

The experimental results thus obtained are shown in the following tables and in the accompanying **Figures 1-11.**

## Description of the Figures

**Figure 1** (Fig. 1) shows UV spectra of an aqueous so- lution of the inclusion complex Cavasol W7 MCT®/DEET (referred to therein as CDDEET) in the different dilutions as listed in the following Table 1.

**Figure 2** (Fig. 2) shows the calibration line for said aqueous solution of CDDEET as obtained from the data of Fig. 1.

**Figure 3** (Fig. 3) shows UV spectra of an aqueous so- lution of pure, not-complexed Cavasol W7 MCT® (referred to therein as CD) in the dif- ferent dilutions as listed in the following Table 2.

**Figure 4** (Fig. 4) shows the calibration line for said aqueous solution of CD as obtained from the data of Fig. 3.

**Figure 5** (Fig. 5) shows UV spectra of a solution in acetonitrile of pure, not-complexed DEET (referred to therein as DEET) in the differ- ent dilutions as listed in the following Ta- ble 3.

**Figure 6** (Fig. 6) shows the calibration line for said solution in acetonitrile of DEET as obtained from the data of Fig. 5.

**Figure 7** (Fig. 7) shows the three calibration lines of Fig. 2, Fig. 4 and Fig. 6 on the same Cartesian system.

**Figure 8** (Fig. 8) shows IR spectra referring to the sampling made on a cotton fabric before and after impregnation executed with the follow- ing Composition A (containing only not- complexed Cavasol W7 MCT®, referred to as CDMCT). The figure shows at 1570 $cm^{-1}$ the characteristic peak of Cavasol.

**Figure 9** (Fig. 9) shows IR spectra referring to the sampling made on a cotton fabric impregnated with Composition

A (containing only not- complexed Cavasol W7 MCT®, referred to as CDMCT), after extracting the latter in a Soxhelet extractor, with water.

**Figure 10** (Fig. 10) shows IR spectra referring to the sampling made on a cotton fabric before and after impregnation executed with the follow- ing Composition B (containing the stable so- lution of the complex Cavasol W7 MCT®/DEET, referred to therein as CDMCT DEET).

**Figure 11** (Fig. 11) shows IR spectra referring to the sampling made on a cotton fabric impregnated with Composition B (containing the stable solution of the complex Cavasol W7 MCT®/DEET, referred to therein as CDMCT DEET), after extracting the latter in a Sox- helet extractor with water.

The stable solution according to the present invention is prepared by adding to 1000 ml of water 250 g of Cavasol W7 MCT® (Cavasol) and 25 g of DEET, as described above.

In this solution Cavasol is added in a larger amount (+22.66%) than the one required for an equimolar ratio with DEET (molar ratio of about 1.22:1 with respect to stoichiometric ratio).

The solution thus obtained (mother liquor) is then diluted at different concentrations and used for acquiring a series of UV spectra between 200 and 300 nm; said spectra are then compared with those referring to solutions of pure Cavasol and of pure DEET.

The dilutions made on the mother liquor of complex Cavasol/DEET are those listed in the following Table 1.

***Table 1 - Dilutions made on mother liquor Cavasol/DEET (with reference to initial Cavasol concentration)***

| Taken amount [ml] | Final volume [ml] | Concentration [mg/l] |
|---|---|---|
| 1 | 10 | 250 |
| 1 | 100 | 25 |
| 2 | 100 | 50 |
| 4 | 10 | 100 |

UV spectra referring to the above solutions are acquired with a spectrophotometer Perkin-Elmer Lambda 20 and are shown in Fig. 1.

Since at the concentrations of Table 1 the maximum absorbance value is of 1.2 (therefore inside the area of validity of Lambert-Beer law), it is possible to correlate the values of characteristic peak areas with the concentration of the prepared solutions.

This enables to build the calibration line shown in Fig. 2 starting from spectra shown in Fig. 1.

For each one of the spectra of Fig. 1 the fourth-order derivative is calculated so as to evaluate better at which wavelength diagnostic peaks of Cavasol and DEET fall; said derivatives are then squared and the square root is then calculated so as to make all peaks positive. Eventually, each curve is multiplied for a factor of 1000 so as to increase width and reduce error on the measure of characteristic peak area. The same test is executed also on solutions of pure Cavasol and of pure DEET.

As far as Cavasol is concerned, an aqueous mother liquor with a concentration of 1 g/l is prepared.

From this solution, through the dilutions listed in the following Table 2, four solutions having a different concentration are obtained.

***Table 2 - Dilutions made on mother liquor of Cavasol***

| Taken amount [ml] | Final volume [ml] | Concentration [mg/l] |
|---|---|---|
| 10 | 100 | 100 |
| 7.5 | 10 | 75 |
| 2.5 | 10 | 25 |
| 1 | 100 | 1 |

UV spectra, which are acquired in the same interval of wavelengths as is used before for the solutions of complex Cavasol/DEET as listed above, are shown in Fig. 3.

Following the same procedure described above, from the spectra of Fig. 3 the calibration line referring to the solution of not-complexed Cavasol is obtained, as shown in Fig. 4.

The following Table 3 contains a list of the dilutions made starting from a mother liquor containing 1 g/l of DEET in acetonitrile.

***Table 3 - Dilutions made on mother liquor of DEET***

| Taken amount [ml] | Final volume [ml] | Concentration [mg/l] |
|---|---|---|
| 5 | 10 | 5 |
| 2.5 | 10 | 2.5 |
| 1 | 10 | 1 |
| 0.5 | 10 | 0.5 |

UV spectra of the solutions listed above are shown in Fig. 5.

Following the same procedure described above, from the spectra of Fig. 5 the calibration line referring to the solution of DEET is obtained, as shown in Fig. 6. Placing the three lines shown in Fig. 2, Fig. 4 and Fig. 6 on the same Cartesian reference system, as shown in Fig. 7, it can be clearly seen that the line referring to DEET has a higher angular coefficient (1.9 $10^{-1}$) than the other two lines (0.56 $10^{-2}$ and 0.43 $10^{-2}$) . This is due to the fact that DEET absorbs more UV rays than the other two compounds.

Fig. 7 further points out in quite a clear way that the values of absorption of UV rays for the solution of complex Cavasol/DEET are little affected by the presence of DEET molecule.

As a matter of fact, their development is more like Cavasol alone than DEET alone.

This shows that DEET penetrates into cyclodextrin structure (therefore the inclusion complex is formed) and is thus screened and does not absorb UV rays but to a minimum extent.

Were it not so, it should provide a far more intense signal than the one it provides.

Fig. 7 provides further evidence, though on a qualitative level, that the aqueous solution of complex Cavasol/DEET is a stable solution.

Use of the aqueous solution of inclusion complex Cavasol/DEET for impregnating in a stable manner fabrics with a cellulose matrix.

Two liquid compositions having the following formulations are prepared.

| Composition A | Composition B |
|---|---|
| 250 g/l Cavasol | 250 g/l Cavasol |
| 50 g/l $Na_2CO_3$ | 25 g/l DEET |
| | 50 g/l $Na_2CO_3$ |

Composition B comprises the stable aqueous solution prepared by adding to 1000 ml of water 250 g of Cavasol and 25 g of DEET, as described above.

The catalyst ($Na_2CO_3$) is added to the preserved solution of said reagents short before use.

A 100% cotton fabric, with a weight of 150 g/m$^2$, is used for the tests.

2 samples (foulards) with size 40x40 cm$^2$ are cut out of said fabric; one sample is impregnated with Composition A and the other one with Composition B, using the following operating conditions:

- Roll pressure = 3 bar;
- Roll speed = 1.3 m/min.

Both samples are then thermofixed in a "Ramouse" machine (5 min; 150°C).

Impregnation parameters for this test are the following.

For Composition A:

| | | | |
|---|---|---|---|
| $V_{feeding}$ [m/min] | 1.3 | $Weight_{in}$ [g] | 23. 87 |
| $p_{rolls}$ [bar] | 3 | $Weight_{fin}$ [g] | 41.72 |
| $pH_{bath}$ | 10.37 | Pick-up [%] | 74.78 |

For Composition B:

| | | | |
|---|---|---|---|
| $V_{feeding}$ [m/min] | 1.3 | $Weight_{in}$ [g] | 24 |
| $p_{rolls}$ [bar] | 3 | $Weight_{fin}$ [g] | 41.02 |
| $pH_{bath}$ | 10.38 | Pick-up [%] | 70.92 |

A sample test is made on each of both fabric samples through a spectrophotometer FT-IR in 5 different surface areas.

For both samples IR spectra are acquired:

- before impregnation;
- after impregnation;
- after extraction of impregnated fabric in a Soxhelet extractor with water.

IR spectra are shown in Figs. 8-11.
The following results are found.
From Fig. 8, by bringing to absorbance spectra referring to fabric sampling before and after impregnation and by normalizing them between 1089 and 1039 $cm^{-1}$, the presence of cyclodextrin on fabric surface (peak at 1570 $cm^{-1}$) can be clearly seen.
In order to monitor the amount of reagent that binds chemically with the substrate, the fabric is extracted in a Soxhelet extractor (at boiling point for 24 hours) using distilled water as solvent.
As can be inferred from Fig. 9, characteristic peaks of Cavasol are less evident than those acquired before extraction but are still clearly present (therefore the fabric is anyhow impregnated in a stable manner).
Quantitative percentage determination of the degree of stable impregnation (i.e. of the amount of Cavasol that binds chemically with the substrate).
All sampling results are shown in the following Table 6.

***Table 6- Difference between peak areas of Cavasol referring to 5 sampling areas***

| | Peak area | | | | | | |
|---|---|---|---|---|---|---|---|
| Area | CONT (C1) | COCD (C2) | COCD/ lav. (C3) | COCD/ Cor (C4) | COCD/ Lav Cor (C5) | Yield [%] | Average Yield [%] |
| 1 | 7.7953 | 27.5523 | 15.0384 | 19.757 | 7.2431 | 63.34 | |
| 2 | 6.7155 | 27.0532 | 17.5233 | 20.3377 | 10.8078 | 46.86 | |
| 3 | 5.1042 | 38.0193 | 21.7612 | 32.9151 | 16.657 | 49.39 | 52.77 |
| 4 | 10.916 | 39.1827 | 26.4966 | 28.2667 | 15.5806 | 44.88 | |
| 5 | 7.1647 | 43.9006 | 22.0871 | 36.7359 | 14.9224 | 59.38 | |

Key:
CONT = Untreated cotton
COCD = Cotton treated with Cavasol
COCD/lav = Cotton treated after extraction
COCD/Cor = C2 - C1
COCD/lav Cor = C3 - C1
Yield = [(C4 - C5)/C4] x 100

The amount of reagent that binds chemically with the substrate is determined in the same way also for Composition B.
IR spectra referring to sampling before and after impregnation with complex Cavasol/DEET are shown in Fig. 10.
Also for this sample, extraction is carried out in a Soxhelet extractor using water as solvent (at boiling point for 24 hours). Spectra acquired after said extraction are shown in Fig. 11.
In both figures the presence of peak at 1570 $cm^{-1}$, corresponding to cyclodextrins, can be clearly seen. Quantitative percentage determination of the degree of stable impregnation (i.e. of the amount of reagent that binds chemically with the substrate).
All sampling results are shown in the following Table 7.

***Table 7- Difference between peak areas of complex Cavasol/DEET referring to 5 sampling areas***

| | Peak area | | | | | | |
|---|---|---|---|---|---|---|---|
| Area | CONT (C1) | COCD (C2) | COCD/ lav. (C3) | COCD/ Cor (C4) | COCD/ lav Cor (C5) | Yield [%] | Average Yield [%] |
| 1 | 5.5139 | 22.7454 | 13.3881 | 17.2315 | 7.8742 | 54.30 | |
| 2 | 3.9797 | 28.6925 | 12.9994 | 24.7128 | 9.0197 | 63.50 | |
| 3 | 6.4112 | 30.7658 | 16.6829 | 24.3546 | 10.2717 | 57.82 | 57.65 |
| 4 | 4.0684 | 33.4857 | 19.0898 | 29.4173 | 15.0214 | 48.94 | |

(continued)

| | Peak area | | | | | | |
|---|---|---|---|---|---|---|---|
| Area | CONT (C1) | COCD (C2) | COCD/ lav. (C3) | COCD/ Cor (C4) | COCD/ lav Cor (C5) | Yield [%] | Average Yield [%] |
| 5 | 4.9019 | 41.0094 | 18.0105 | 36.1075 | 13.1086 | 63.70 | |

Key:
COCD = Cotton treated
COCD lav = cotton treated after extraction
COCD/Cor = C2 - C1
COCD/lav. Cor = C3 - C1

$$Yield = [(C4 - C5)/C4] \times 100$$

From data shown in previous Tables 6 and 7, it can be inferred that both tested compositions (the one containing pure Cavasol, i.e. Composition A, and the one containing the complex Cavasol/DEET, i.e. Composition B) behave basically in the same way when undergoing the chemical fixation process on the fabric.

In order to check whether DEET is actually present in the fabric impregnated with Composition B, said fabric, after being extracted in a Soxhelet extractor with water (as described above), is further extracted in a Soxhelet extractor with chloroform (at boiling point for 24 hours) so as to extract DEET.

The following determination of the average amount of DEET, obtained by gas chromatography (GC), confirms that DEET present basically corresponds to the expected amount for complex Cavasol/DEET.

The complexes β-cyclodextrin/DEET according to the present invention have proved particularly useful for preparing solutions and/or formulations that are stable in time, to be used for manufacturing fabrics with repellent properties towards mosquitoes.

In particular, said solutions and/or formulations can be advantageously used for applications in the field of protective clothes (for instance for impregnating in a stable way shirts, scarves, foulards, overcoats, T-shirts, trousers and so on).

Moreover, said solutions and/or formulations can be advantageously used for applications in the "sleeping" field (for instance for impregnating in a stable way mattresses, mattress covers, sheets, pillowcases, mosquito curtains and so on) as well as in the domestic field (for instance for impregnating in a stable way fabrics for sofas, carpets, outdoor and indoor curtains and so on).

Thanks to their stability in time, said solutions and/or formulations further enable to apply the product to the fabric in a simple and cheap way, at the desired concentration, giving said fabric a particularly long-term and effective repellent action towards mosquitoes.

Said action can further be easily recovered after a given period, for instance by applying suitable sprays of said stable solutions and/or formulations according to the present invention.

## Claims

**1.** A stable aqueous solution comprising an inclusion complex, between a reactive β-cyclodextrin derivative and N,N-diethyl-m-toluamide (DEET), wherein the molar ratio between the β-cyclodextrin derivative and DEET is from 10:1 to 1:1 and wherein the β-cyclodextrin derivative is present in a concentration in the range from 35g/l of water to 350g/l of water and the DEET is present in a concentration in the range from 5g/l of water to 50g/l of water and wherein the solution is free from stabilizing additives.

**2.** The aqueous solution according to claim 1, wherein the β-cyclodextrin derivative comprises at least one reactive group selected from the group consisting of: vinylsulfonyl, α-haloacryloyl groups or heterocycle containing nitrogen having at least one halogen substituent.

**3.** The aqueous solution according to claim 2, in which said reactive group is a 1,3,5-triazine substituted with chlorine and ONa.

4. The stable aqueous solution according to any of claims 1-3, wherein the molar ratio between the β-cyclodextrin derivative and DEET is in the range from 5:1 to 1:1, preferably from 2:1 to 1:1, even more preferably 1.22:1.

5. Use of the stable aqueous solution according to any of the claims 1 to 4 for treating chemically fibers and/or fabrics so as to give them a long-term insect-repellent action.

6. The use according to claim 5, in which said insect-repellent action is exerted towards flies, fleas, ticks, mosquitoes, bees, wasps, hornets.

7. A method for treating chemically fibers and/or fabrics so as to give them a repellent activity towards harmful and/or troublesome insects comprising the following steps:

a) adding to the solution according to any of the claims 1 to 4 an amount of a catalyst, chosen among inorganic salts, of 5 g/l to 80 g/l with respect to the amount of water used;
b) impregnating fibers and/or fabrics with the solutions obtained from a);
c) fixing with a covalent bond the inclusion complex cyclodextrins/DEET and the fibers and/or fabrics.

**Patentansprüche**

1. Stabile wässrige Lösung umfassend einen Einschlusskomplex zwischen einem reaktiven β-Cyclodextrinderivat und N,N-Diethyl-m-toluamid (DEET), worin das Molverhältnis vom β-Cyclodextrinderivat zu DEET von 10:1 bis 1:1 beträgt, und worin das β-Cyclodextrinderivat in einer Konzentration im Bereich von 35 g/l Wasser bis 350 g/l Wasser vorhanden ist und das DEET in einer Konzentration im Bereich von 5 g/l Wasser bis 50 g/l Wasser vorhanden ist, und worin die Lösung frei von Stabilisierungszusatzmitteln ist.

2. Wässrige Lösung nach Anspruch 1, worin das β-Cyclodextrinderivat mindestens eine reaktive Gruppe umfasst, die aus der Gruppe umfassend Vinylsulphonyl- und α-Haloacryloylgruppen oder ein Heterozyklus enthaltend Stickstoff mit mindestens einem Halogensubstituent ausgewählt ist.

3. Wässrige Lösung nach Anspruch 2, worin die benannte reaktive Gruppe ein 1,3,5-Triazin ist, die mit Chlor und ONa substituiert ist.

4. Stabile wässrige Lösung nach irgendeinem der Ansprüche 1-3, worin das Molverhältnis vom β-Cyclodextrinderivat zu DEET im Bereich von 5:1 bis 1:1, bevorzugt von 2:1 bis 1:1 liegt, noch bevorzugter 1,22:1 beträgt.

5. Verwendung der stabilen wässrigen Lösung nach irgendeinem der Ansprüche 1 bis 4 zur chemischen Behandlung von Fasern und/oder Geweben, um ihnen eine dauernde insektenabwehrende Wirkung zu verleihen.

6. Verwendung nach Anspruch 5, worin die benannte insektenabwehrende Wirkung gegen Fliegen, Flöhe, Zecken, Mücken, Bienen, Wespen, Hornissen ausgeübt wird.

7. Verfahren zur chemischen Behandlung von Fasern und/oder Geweben, um ihnen eine abwehrende Wirkung gegen schädlich und/oder lästige Insekten zu verleihen, umfassend die folgenden Schritte:

a) Zusetzen zur Lösung nach irgendeinem der Ansprüche 1 bis 4 von einer Menge eines Katalysators, der aus anorganischen Salzen ausgewählt wird, von 5 g/l bis 80 g/l mit Bezug auf die verwendete Wassermenge;
b) Tränkung von Fasern und/oder Geweben mit den Lösungen aus a);
c) Fixierung des Einschlusskomplexes Cyclodextrine/DEET und der Fasern und/oder Geweben mit einer kovalenten Bindung.

**Revendications**

1. Solution aqueuse stabile comprenant un complexe d’inclusion entre un dérivé réactif de β-cyclodextrine et N,N-diéthyl-m-toluamide (DEET), où le rapport molaire entre le dérivé de β-cyclodextrine et DEET est compris entre 10:1 e 1:1, et où le dérivé de β-cyclodextrine est présent dans une concentration dans l’intervalle de 35 g/l d’eau à 350 g/l d’eau et le DEET est présent dans une concentration dans l’intervalle de 5 g/l d’eau et 50 g/l d’eau, et où la

solution est prive d'additifs stabilisateurs.

2. Solution aqueuse selon la revendication 1, où le dérivé de β-cyclodextrine comprend au moins un groupe réactif choisi dans le groupe comprenant: groupes vinylsulfonyle, groupes de α-haloacryloyle ou un hétérocycle contenant azote et ayant au moins un substituant halogène.

3. Solution aqueuse selon la revendication 2, où ledit groupe réactif est une 1,3,5-triazine substituée avec chlore et ONa.

4. Solution aqueuse stabile selon une quelconque des revendications 1-3, où le rapport molaire entre le dérivé de β-cyclodextrine et DEET est compris dans l'intervalle de 5:1 à 1:1, préférablement de 2:1 à 1:1, encore plus préférablement de 1,22:1.

5. Utilisation de la solution aqueuse stabile selon une quelconque des revendications 1 à 4 pour le traitement chimique de fibres et/ou tissus pour leur donner une action répulsive contre les insectes de longue durée.

6. Utilisation selon la revendication 5, où ladite action répulsive est exercée contre mouches, puces, tiques, maringouins, abeilles, guêpes, frelons

7. Méthode pour le traitement chimique de fibres et/ou tissus pour leur donner un activité répulsive contre les insectes nocifs et/ou ennuyeux, comprenant les étapes suivantes :

a) ajouter à la solution selon une quelconque des revendications 1 à 4 une quantité d'un catalyseur, choisi parmi les sels inorganiques, de 5 g/l à 80 g/l par rapport à la quantité d'eau employée;
b) imprégner les fibres et/ou tissus avec les solutions obtenues de a);
c) fixer avec un lien covalent le complexe d'inclusion cyclodextrines/DEET et les fibres et/ou tissus.

# Fig. 1

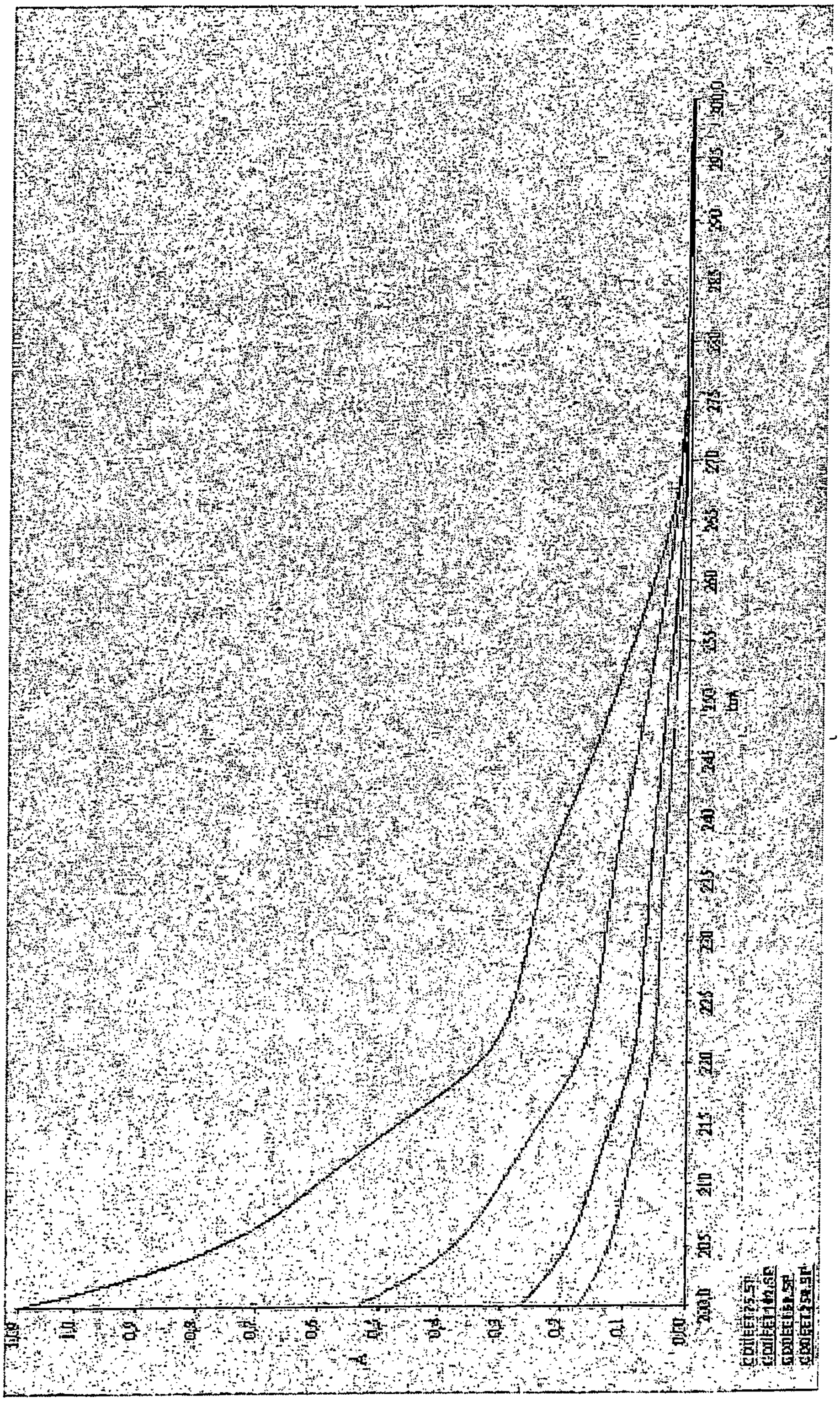

Fig. 2

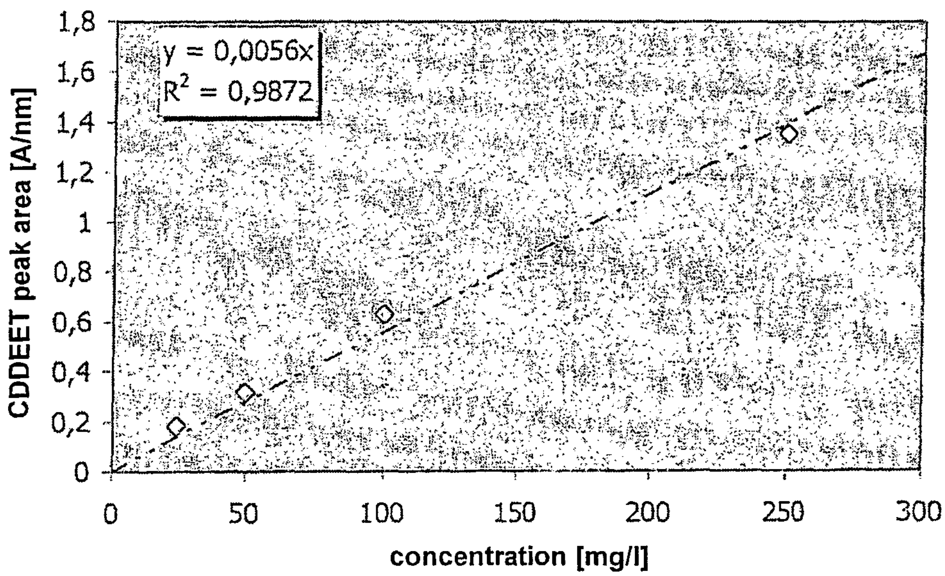
y = 0,0056x
$R^2$ = 0,9872
CDDEET peak area [A/nm]
0
0,2
0,4
0,6
0,8
1
1,2
1,4
1,6
1,8
0
50
100
150
200
250
300
concentration [mg/l]

Fig. 3

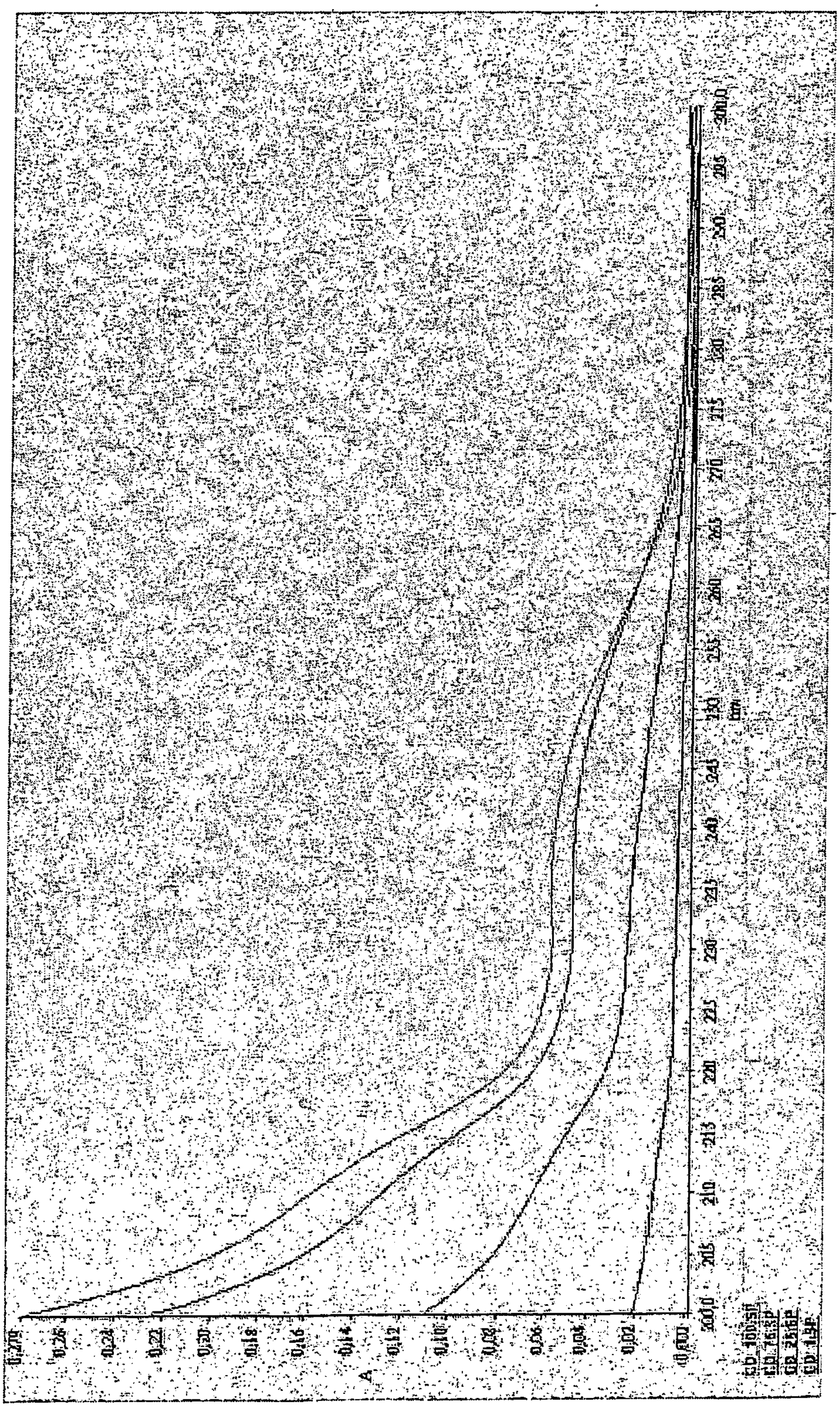

Fig. 4

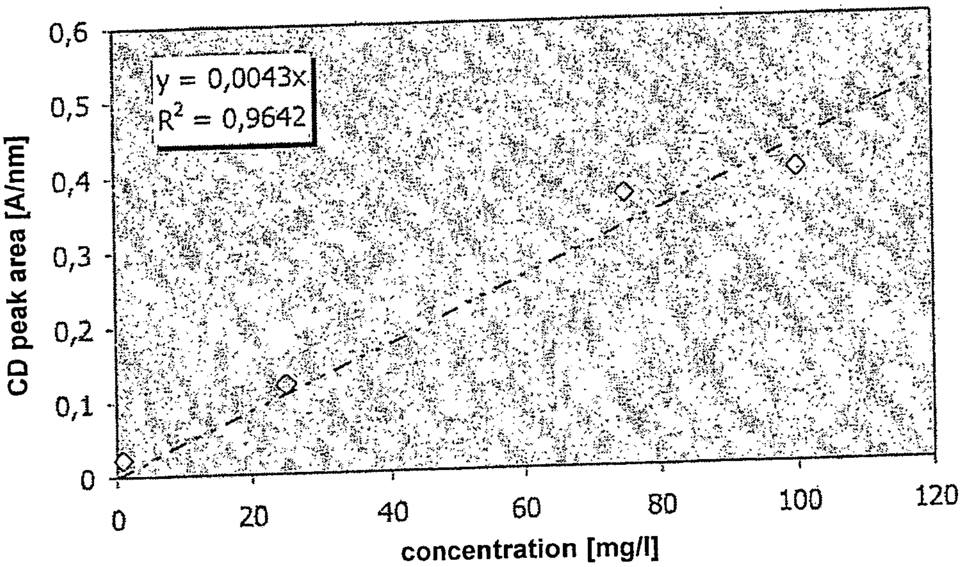
y = 0,0043x
$R^2$ = 0,9642
CD peak area [A/nm]
0,6
0,5
0,4
0,3
0,2
0,1
0
0
20
40
60
80
100
120
concentration [mg/l]

# Fig. 5

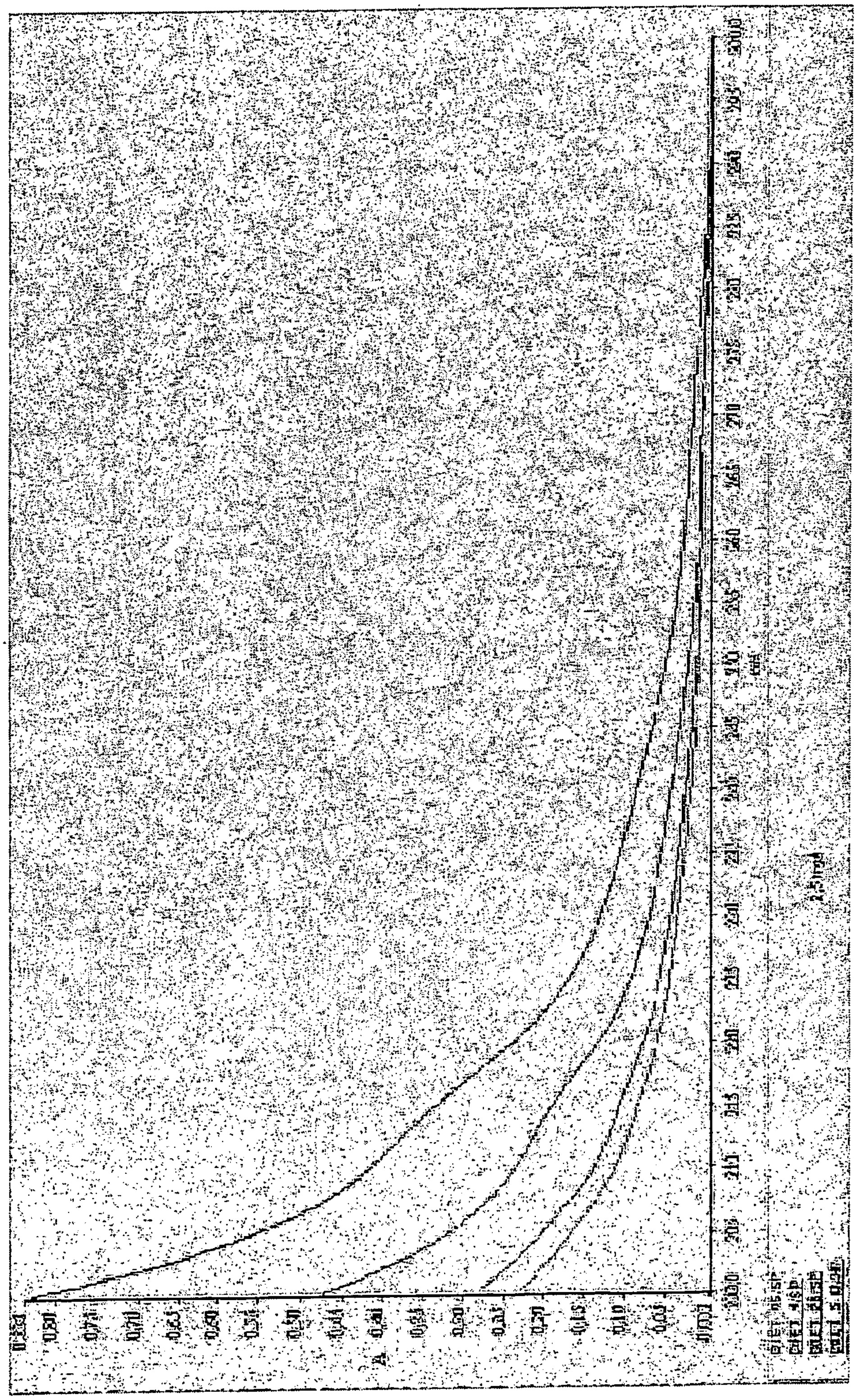

Fig. 6

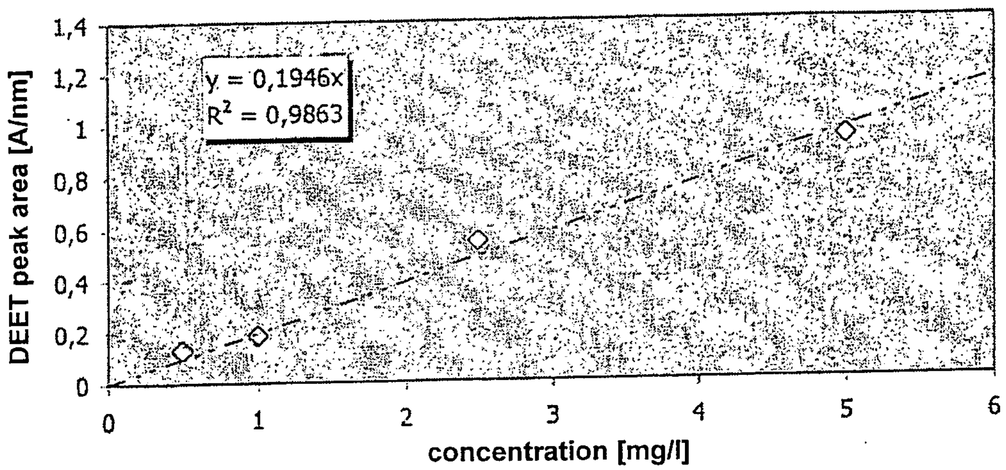
y = 0,1946x
R2 = 0,9863
DEET peak area [A/nm]
1,4
1,2
1
0,8
0,6
0,4
0,2
0
0
1
2
3
4
5
6
concentration [mg/l]

Fig. 7

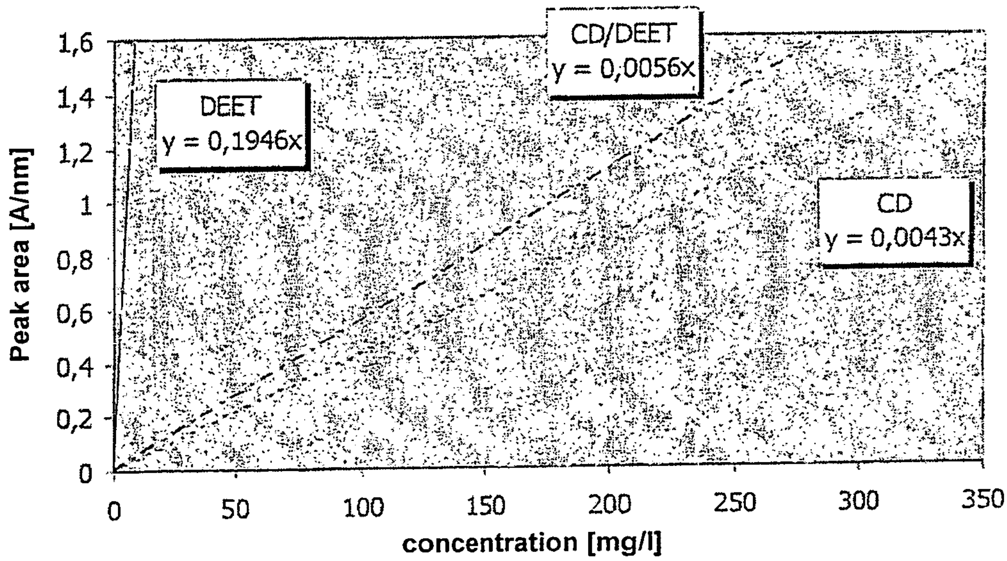

CD/DEET
y = 0,0056x
DEET
y = 0,1946x
CD
y = 0,0043x
Peak area [A/nm]
1,6
1,4
1,2
1
0,8
0,6
0,4
0,2
0
0
50
100
150
200
250
300
350
concentration [mg/l]

Fig. 8

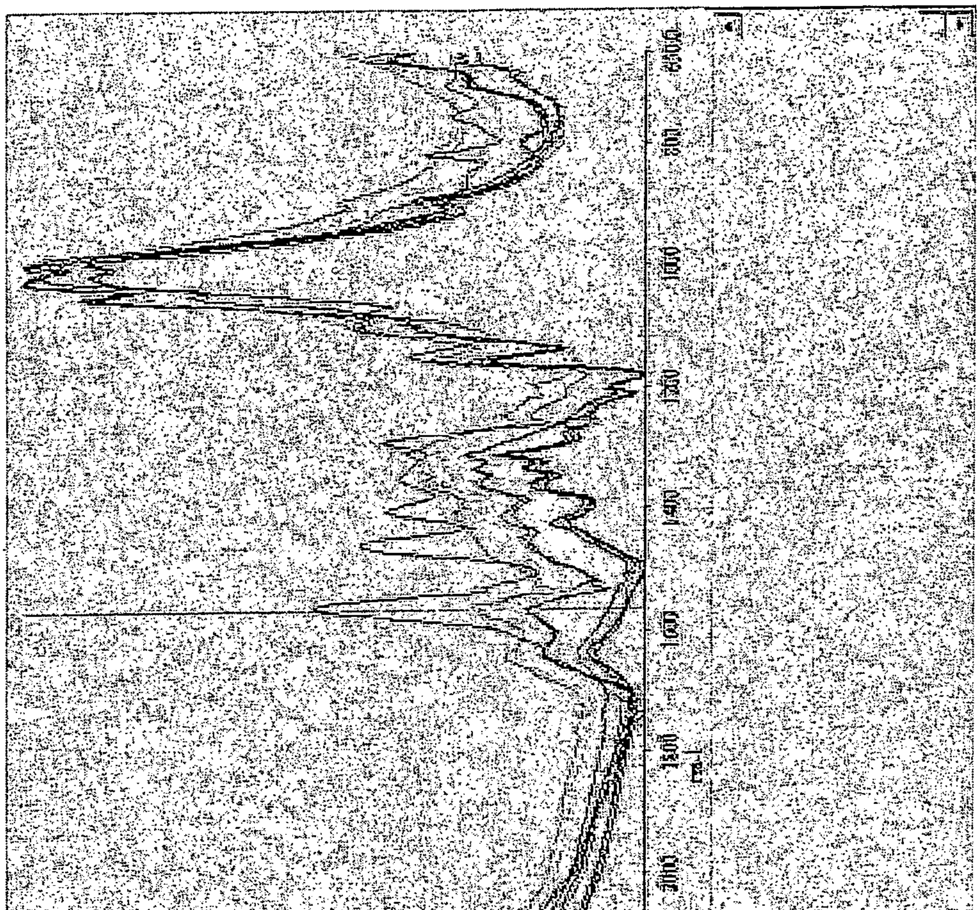

Fig. 9

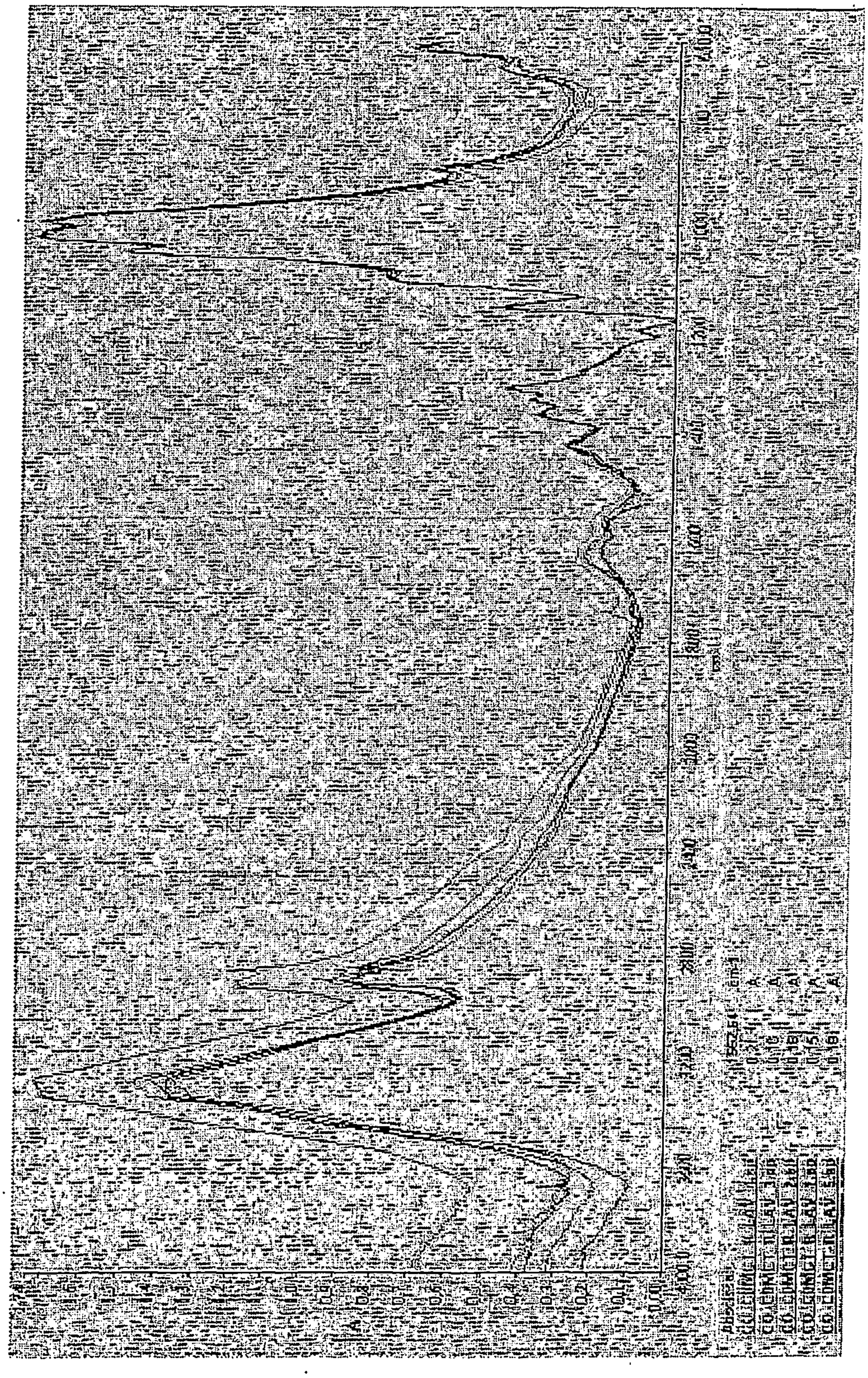

Fig. 10

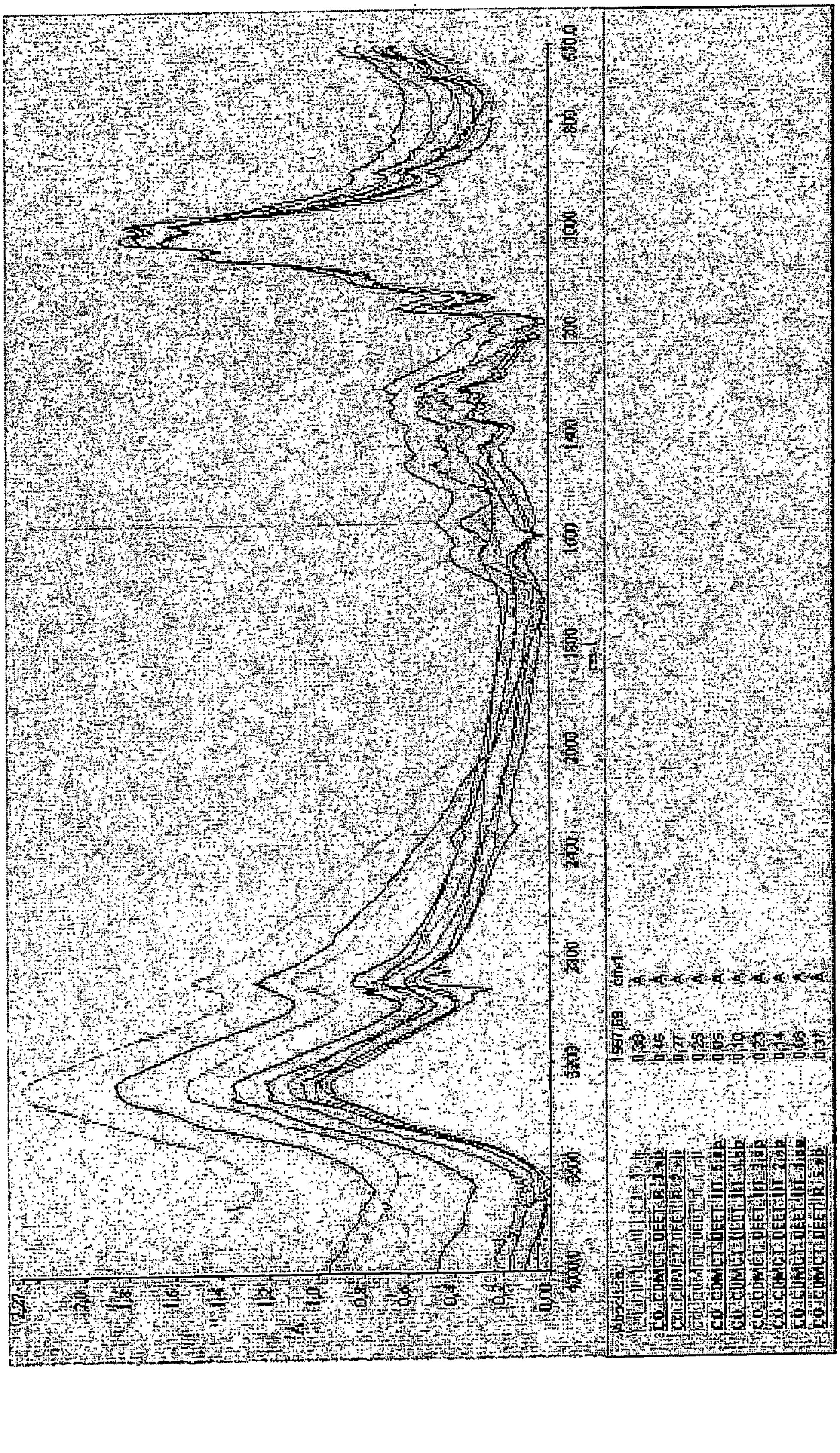

Fig. 11

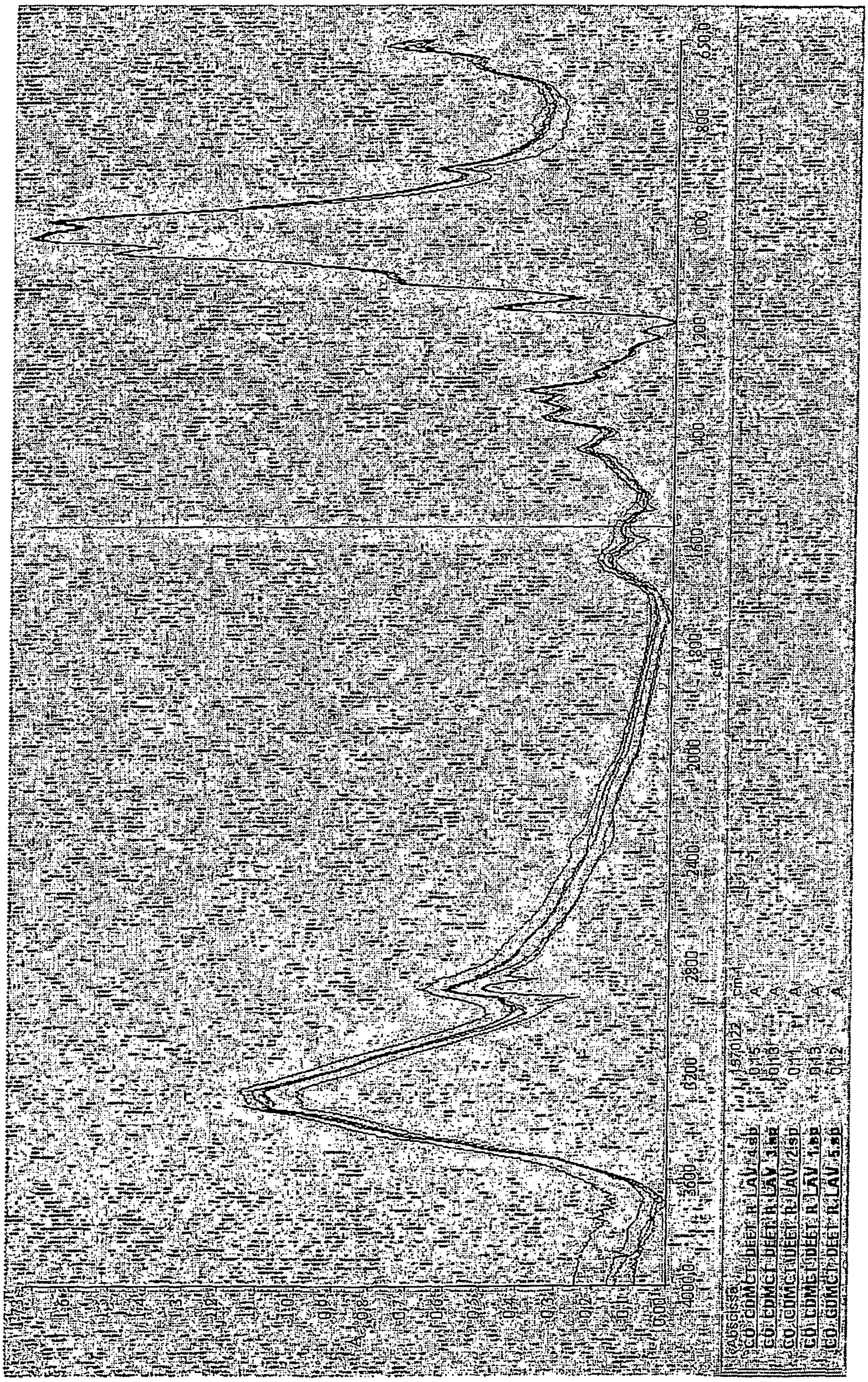
4000.0
3600
3200
2800
2400
2000
1800
1600
1400
1200
1000
800
650.0
cm-1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03093325 A